# EUROPEAN PATENT SPECIFICATION

(11) **EP 0 932 586 B1**
(45) Date of publication and mention of the grant of the patent: **14.08.2002**
(21) Application number: 98919614.2
(22) Date of filing: 15.05.1998
(51) Int. Cl.: C03C 17/25, C03B 23/24

(54) **SOLAR REFLECTIVE GLASS BLOCK AND METHOD OF PRODUCING THE SAME**
SONNENSTRAHLUNG REFLEKTIERENDER HOHLGLASSTEIN UND VERFAHREN ZUR HERSTELLUNG
BRIQUE DE VERRE REFLECHISSANT LES RAYONS SOLAIRES ET SON PROCEDE DE PRODUCTION

(30) Priority: 22.05.1997 JP 15019497; 24.06.1997 JP 18455097
(43) Date of publication of application: 04.08.1999
(73) Proprietor: NIPPON ELECTRIC GLASS COMPANY, Limited, Otsu-shi Siga 520 (JP)
(72) Inventor: YAMAJI, Michio Nippon Electric Glass Co., Ltd., Otsu-shi Shiga 520-8639 (JP); HASHIBE, Yoshio Nippon Electric Glass Co., Ltd., Otsu-shi Shiga 520-8639 (JP)
(74) Representative: Tetzner, Michael, Dipl.-Ing.
(86) International application number: JP9802150
(87) International publication number: WO9852881

(56) References cited:
- DE-A- 2 525 981
- DE-A- 2 830 504
- GB-A- 2 285 634
- US-A- 3 563 717
- US-A- 3 778 243
- PATENT ABSTRACTS OF JAPAN vol. 096, no. 007, 31 July 1996 & JP 08 059299 A (NIPPON SHEET GLASS CO LTD), 5 March 1996
- PATENT ABSTRACTS OF JAPAN vol. 095, no. 010, 30 November 1995 & JP 07 175237 A (RICOH CO LTD;OTHERS: 01), 14 July 1995

## Description

The present invention relates to a solar reflective glass block to be used mainly for an external wall of a building, and a method of producing the solar reflective glass block.

### Background Art:

Glass blocks are glass press-formed bodies each having a hollow box shape with a pair of mutually confronting light transparent walls. It should be noted that the term "light transparent" includes "light translucent". Hereinafter, the term "light transparent" will be referred to as "transparent" for the purpose of simplification of the description. The glass blocks are excellent in lighting, heat insulation, sound insulation and fire resistance so that they have been widely used for external walls of buildings.

There are available the glass blocks of various dimensions and appearances. As the glass blocks to be used for the external walls of the buildings, there are so-called solar reflective glass blocks each formed with a metal oxide film, which is reluctant to transmit the solar radiation heat therethrough, on an outer side of at least one of the transparent walls.

When the solar reflective glass blocks are used for the external walls of the buildings, the solar radiation heat entering a room is reduced so that the cooling load can be lightened. Accordingly, they have been favorably used in regions where the solar radiation is strong.

However, if such solar reflective glass blocks are used for the external walls of the buildings, the metal oxide films formed on the outer sides of the transparent walls thereof are exposed to the weather over a long term so that the films are gradually degraded to possibly lower a solar reflection characteristic of the glass blocks.

Further, there may also be a drawback that the lighting is poor, or the surfaces of the glass blocks become mirror-like to cause the external walls of the building to be dazzling or glaring.

Accordingly, it is an object of the present invention to provide a solar reflective glass block whose solar reflection characteristic is not lowered even if it is used for an external wall of a building over a long term.

It is another object of the present invention to provide a solar reflective glass block which can suppress as much as possible insufficiency of the lighting or the glare caused by reflection of the solar radiation.

It is still another object of the present invention to provide a producing method of the foregoing solar reflective glass blocks.

### Disclosure of the Invention:

According to one aspect of the present invention, there is provided a solar reflective glass block which is characterized by comprising a glass press-formed body of a hollow box shape having a pair of mutually confronting transparent walls. In the solar reflective glass block, a metal oxide film is formed on an inner side of at least one of the transparent walls, and the metal oxide film has a solar radiation reflectance of 15 to 60%, a solar radiation absorptance of 5 to 60% and a solar radiation transmittance of 20 to 70%, measured in accordance with JIS R3106.

According to another aspect of the present invention, there is provided a method of producing a solar reflective glass block which is characterized by comprising a step of preparing a pair of glass press-formed bodies each having a box shape with a bottom and no top and each having a transparent wall, a step of spraying a solution containing metallic compound onto an inner side of the bottom of at least one of the glass press-formed bodies so as to form a metal oxide film having a solar radiation reflectance of 15 to 60%, a solar radiation absorptance of 5 to 60% and a solar radiation transmittance of 20 to 70%, and a step of softening open edges of the glass press-formed bodies by heating, and then sealing them together while applying pressure.

### Brief Description of the Drawings:

Fig. 1 is a side sectional view showing an embodiment of a solar reflective glass block according to the present invention; and
Fig. 2 is a side sectional view showing another embodiment of a solar reflective glass block according to the present invention.

### Best Mode for Carrying Out the Invention:

Prior to description of the best mode for carrying out the present invention, the present invention will be explained more concretely.

In the solar reflective glass block of the present invention, a metal oxide film is formed on an inner side of a transparent wall and thus is not exposed to the open air. Therefore, even if it is used for an external wall of a building over a long term, a solar reflection characteristic thereof is not lowered.

Further, by adjusting the solar radiation reflectance, the solar radiation absorptance and the solar radiation transmittance to within the foregoing ranges, there can be obtained the glass block with more lighting and less glare while having a sufficient solar reflection characteristic.

In the present invention, the metal oxide film may be formed on an inner side of each of the transparent walls of the glass block. However, if a desired characteristic can be obtained, the metal oxide film may be formed on an inner side of only one of the transparent walls normally at the exterior side of the room since it is advantageous in view of production and cost.

There is no particular limitation to the metal oxide film as long as the desired solar radiation reflectance, absorptance and transmittance can be obtained. For example, a cobalt-based, iron-based or titanium-based metal oxide film can be used. Among them, the cobalt-based film is preferable since it has a particularly high solar reflection characteristic. It is preferable that use is made of the cobalt-based film in the range of CoO+Co₂O₃ being 70 to 100 weight% (preferably 80 to 100 weight%), NiO being 0 to 30 weight% (preferably 0 to 20 weight%) and Fe₂O₃ being 0 to 30 weight% (preferably 0 to 20 weight%).

The thickness of the metal oxide film is preferably 50 to 1,000Å, more preferably 200 to 800 Å. If the thickness is less than 50 Å, it is difficult to obtain the sufficient solar reflection characteristic. On the other hand, if the thickness is greater than 1,000 Å, dispersion in thickness tends to occur to spoil the appearance thereof.

The metal oxide film has the solar radiation reflectance in the range of 15 to 60%. If the solar radiation reflectance of the metal oxide film is lower than 15%, an excellent solar reflection characteristic can not be obtained since there is no effect of reflecting the solar radiation heat. On the other hand, if the solar radiation reflectance is higher than 60%, it becomes glaring.

The metal oxide film has the solar radiation absorptance in the range of 5 to 60%. If the solar radiation absorptance of the metal oxide film is lower than 5%, an excellent solar reflection characteristic can not be obtained since the film becomes transparent to allow transmission of most of the solar radiation heat. On the other hand, if the solar radiation absorptance is higher than 60%, the block tends to be damaged due to an increase in glass temperature caused by absorption of the solar radiation heat. Further, since the heat absorbed into the film is radiated toward the interior side of the room, an effect of heat insulation is lowered.

The metal oxide film has the solar radiation transmittance in the range of 20 to 70%. If the solar radiation transmittance is lower than 20%, the sufficient lighting can not be obtained so that no merit exists in using the glass block for the external wall. On the other hand, if the solar radiation transmittance is higher than 70%, the sufficient solar reflection characteristic can not

If the film is formed on the inner side of only one of the transparent walls, the solar radiation reflectance, absorptance and transmittance of the film are preferably 15 to 60% (more preferably 23 to 45%), 5 to 60% (more preferably 25 to 40%), and 20 to 65% (more preferably 25 to 55%), respectively. On the other hand, if the films are formed on the inner sides of both of the transparent walls, the solar radiation reflectance, absorptance and transmittance of each of the films are preferably 15 to 35% (more preferably 15 to 30%), 5 to 40% (more preferably 5 to 30%), and 30 to 70% (more preferably 40 to 70%), respectively.

Now, a method of producing the foregoing solar reflective glass block will be described.

First, high-temperature glass is pressed to form a pair of glass press-formed bodies each having a box shape with a bottom and no top. Then, a solution containing metallic compound is sprayed onto an inner side of the bottom of at least one of the glass press-formed bodies so as to form a metal oxide film. The kind, concentration, etc. of the solution are adjusted so that the solar radiation reflectance, absorptance and transmittance of the metal oxide film become 15 to 60%, 5 to 60% and 20 to 70%, respectively. Further, as the solution to be sprayed, it is preferable to use a solution obtained by dissolving a metallic compound of Co, Ni, Fe, Ti or the like into an organic solvent. As the metallic compound, metallic soap, such as naphthenate or octylate, or organic metallic salt, such as acetylacetone metallic salt, can be cited. As the organic solvent, ethanol, benzine, toluene, chlorobromoethane, dimethylformamide can be cited. By applying the solution to the high-temperature glass press-formed body immediately after the formation, the solvent is instantaneously decomposed by the heat to be chemically bonded to glass in the state of metal oxide so that a stable film can be formed.

Subsequently, the open edge of each of the glass press-formed bodies is heated to be softened and, by abutting both open edges against each other under pressure, they are sealed together. Then, through a heat treatment for annealing, a solar reflective glass block can be obtained.

A metal film may also be formed by other than the foregoing method. For example, by applying acetylacetone metallic salt powder, such as acetylacetone cobalt salt powder, instead of the solution, using, for example, an electrostatic coating method, the film can be formed.

Also in this case, it is preferable to apply it onto the high-temperature glass press-formed body immediately after the formation.

Now, the best mode for carrying out the present invention will be described in detail.

Tables 1 to 3 below show samples Nos. 1 to 10 as examples of the present invention and a sample No. 11 as a comparative example, respectively.

**Table 1**

| Sample No. | 1 | 2 | 3 | 4 |
|---|---|---|---|---|
| Metal Concentration in Solution (wt%) | | | | |
| Co | 5 | 7 | 4 | 4 |
| Ni | 1 | 1 | 2 | - |
| Fe | - | - | - | 2 |
| Ti | - | - | - | - |

| Metal Oxide Film (wt%) | | | | |
|---|---|---|---|---|
| CoO + Co₂O₃ | 83 | 87 | 67 | 64 |
| NiO | 17 | 13 | 33 | - |
| Fe₂O₃ | - | - | - | 36 |
| TiO₂ | - | - | - | - |
| Solar Rad. Refl. (%) | 24 | 31 | 17 | 19 |
| Solar Rad. Absorp. (%) | 30 | 35 | 18 | 16 |
| Solar Rad. Trans. (%) | 46 | 34 | 65 | 65 |
| Heat Shad. Rate (%) | 45.90 | 56.55 | 30.14 | 30.68 |
| Position of Metal Oxide Film | One Inner Side | One Inner Side | One Inner Side | One Inner Side |
| Heat Shad. Performance | ⓞ | ⓞ | ○ | ○ |
| Lighting | ⓞ | ⓞ | ⓞ | ⓞ |
| Glare | Almost Nil | Almost Nil | Almost Nil | Almost Nil |
| Weather Resistance (Degradation of Film) | No Change | No Change | No Change | No Change |

**Table 2**

| Sample No. | 5 | 6 | 7 | 8 |
|---|---|---|---|---|
| Metal Concentration in Solution (wt%) | | | | |
| Co | 6 | 11 | 12 | - |
| Ni | - | 0.15 | 1 | - |
| Fe | 2 | - | - | 15 |
| Ti | - | - | - | - |

| Metal Oxide Film (wt%) | | | | |
|---|---|---|---|---|
| CoO + Co₂O₃ | 73 | 99 | 92 | - |
| NiO Fe₂O₃ | 27 - | 1 - | 8 - | 100 |
| TiO₂ | - | - | - | - |
| Solar Rad. Refl. (%) | 25 | 38 | 38 | 35 |
| Solar Rad. Absorp. (%) | 23 | 31 | 33 | 13 |
| Solar Rad. Trans. (%) | 52 | 31 | 29 | 52 |
| Heat Shad. Rate (%) | 41.79 | 60.63 | 62.09 | 44.49 |
| Position of Metal Oxide Film | One Inner Side | One Inner Side | One Inner Side | One Inner Side |
| Heat Shad. Performance | ○ | ⓞ | ⓞ | ⓞ |
| Lighting | ⓞ | ⓞ | ○ | ⓞ |
| Glare | Almost Nil | Almost Nil | Almost Nil | Almost Nil |
| Weather Resistance (Degradation of Film) | No Change | No Change | No Change | No Change |

**Table 3**

| Sample No. | 9 | 10 | 11 |
|---|---|---|---|
| Metal Concentration in Solution (wt%) | | | |
| Co | - | 4 | 18 |
| Ni | - | 2 | 0.2 |
| Fe | - | - | - |
| Ti | 5 | - | - |

| Metal Oxide Film (wt%) | | | |
|---|---|---|---|
| CoO + Co₂O₃ | - | 67 | 99 |
| NiO | - | 33 | 1 |
| Fe₂O₃ | - | - | - |
| TiO₂ | 100 | - | - |
| Solar Rad. Refl. (%) | 30 | 17 | 49 |
| Solar Rad. Absorp. (%) | 5 | 18 | 33 |
| Solar Rad. Trans. (%) | 65 | 65 | 18 |
| Heat Shad. Rate (%) | 33.65 | 30.14 | 73.09 |
| Position of Metal Oxide Film | One Inner Side | One Inner Side | One Inner Side |
| Heat Shad. Performance | ○ | ⓞ | ⓞ |
| Lighting | ⓞ | ⓞ | × |
| Glare | Almost Nil | Almost Nil | A Little |
| Weather Resistance (Degradation of Film) | No Change | No Change | Damage Present |

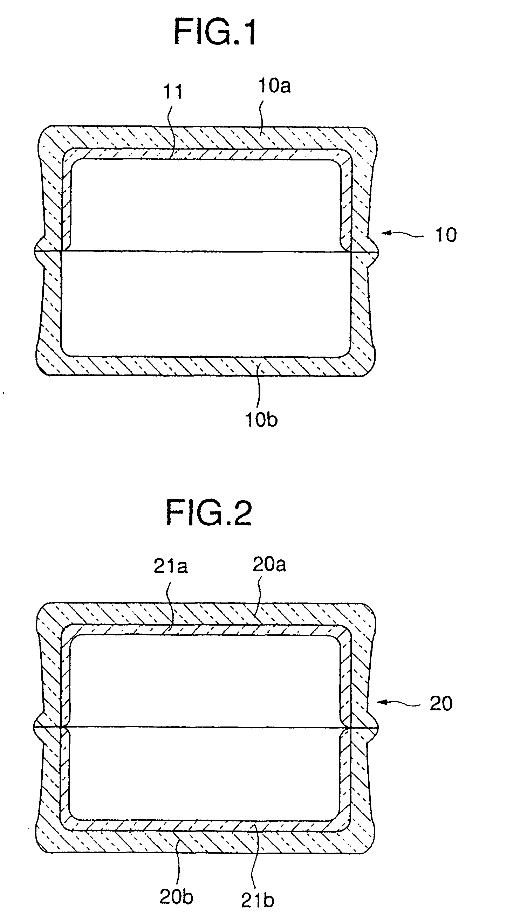

Fig. 1 is a side sectional view of a solar reflective glass block 10 of the samples Nos. 1 to 9. The solar reflective glass block 10 has a hollow box shape of 190mm x 190mm x 95mm. The solar reflective glass block 10 is formed with a metal oxide film 11 having a thickness of 250Å on an inner side of one of transparent walls.

The solar reflective glass block 10 was produced in the following manner. First, soda-lime glass was formed into glass press-formed bodies 10a and 10b each having a box shape with a bottom and no top. Each of the glass press-formed bodies has the dimensions of 190mm x 190mm x 50mm and the mean thickness of 8mm. Immediately after the formation, a solution containing at least one of metallic compound of Co, Ni, Fe and Ti was sprayed for 0.5 seconds onto an inner side of the bottom of the glass press-formed body 10a so as to form the metal oxide film 11. As the solution containing metallic compound, use was made of a solution obtained by dissolving naphthenate (cobalt naphthenate, nickel naphthenate, titanium naphthenate) into a mixed liquid of benzine and toluene. On the other hand, use was made of a solution obtained by dissolving an iron complex into a mixed liquid of ethanol and formamide with respect to Fe.

Subsequently, the open edges of the glass press-formed bodies 10a and 10b were heated to be softened, then abutted against each other under pressure so as to be sealed together, and thereafter annealed so that the glass block 10 was obtained which was formed with the metal oxide film 11 on the inner side of one of the transparent wall.

Fig. 2 is a side sectional view of a solar reflective glass block 20 of the sample No. 10. The solar reflective glass block 20 has a hollow box shape of 190mm x 190mm x 95mm. The solar reflective glass block 20 is formed with metal oxide films 21a and 21b each having a thickness of 250 Å on inner sides of both transparent walls.

The solar reflective glass block 20 was produced in the following manner. First, like the sample No. 1, a pair of glass press-formed bodies 20a and 20b were formed. Immediately after the formation, a solution containing metallic compound of Co and Ni was sprayed onto inner sides of the bottoms of the glass press-formed bodies 20a and 20b so as to form the metal oxide films 21a and 21b. Thereafter, like the sample No. 1, the glass press-formed bodies 21a and 21b were sealed together and then annealed so as to obtain the glass block 20 formed with the metal oxide films 21a and 21b on the inner sides of both of the transparent walls.

As the comparative example, the sample No. 11 was produced in the following manner. First, like the sample No. 1, a pair of glass press-formed bodies were formed. Immediately after the formation, a solution containing metallic compound of Co and Ni was sprayed onto an outer side of the bottom of one of the glass press-formed bodies so as to form a metal oxide film having a thickness of 500 Å. Thereafter, like the sample No. 1, the glass press-formed bodies were sealed together and then annealed so as to obtain a glass block formed with the metal oxide film on the outer side of one of the transparent walls.

With respect to each of the samples thus produced, the solar radiation reflectance, absorptance and transmittance of the film were measured. Further, the solar radiation heat shading rate of the film was derived. In addition, the shading performance for solar radiation heat, the lighting, the glare on the appearance and the weather resistance were evaluated.

As seen from Tables, the samples Nos. 1 to 9 were formed, on the inner side of one of the transparent walls, with the metal oxide films having the solar radiation reflectances of 17 to 38%, the solar radiation absorptances of 5 to 35%, the solar radiation transmittances of 29 to 65% and the solar radiation heat shading rates of 30.14 to 62.09%, respectively. On the other hand, the sample No. 10 was formed, on the inner sides of both of the transparent walls, with the metal oxide films each having the solar radiation reflectance of 17%, the solar radiation absorptance of 27%, the solar radiation transmittance of 56% and the solar radiation heat shading rate of 30.14%. All the samples exhibited the excellent solar radiation heat shading performance and the excellent lighting, and had the appearances with almost no glare. The weather resistance was also evaluated, and no damages were observed on the metal oxide films.

On the other hand, the sample No. 11 was formed as the comparative example on the outer side of one of the transparent walls, with the metal oxide film having the solar radiation reflectance of 49%, the solar radiation absorptance of 33%, the solar radiation transmittance of 18% and the solar radiation heat shading rate of 73.09%. This sample exhibited the excellent solar radiation heat shading performance, but was poor in lighting. The weather resistance was evaluated, and substantial damages were observed on the metal oxide film.

The solar radiation reflectance, absorptance and transmittance were derived, based on JIS R3106, from measured values obtained by measuring the transparent walls using a spectrophotometer. The solar radiation heat shading rate was derived, based on JIS R3106 and R3221, using an expression of (solar radiation reflectance + 0.73 x solar radiation absorptance). The solar radiation heat shading performance was evaluated in the following manner. First, a closed casing (300mm x 300mm x 350mm) of styrene foam having a window of the glass block was produced. Then, artificial solar light (2kW) was radiated toward the glass block window for 30 minutes. The room temperature before the radiation was set to 25°C. When an increase in temperature within the closed casing after the radiation was less than 15°C, mark "ⓞ" was given, when it was not less than 15°C but less than 30°C, mark "O" was given, and when it was not less than 30°C, mark "X" was given. The lighting was evaluated in the following manner. The mean transmittance through 400 to 700nm of the glass block was measured using an illuminometer. When a measured value was not less than 30%, mark "ⓞ" was given, when it was not less than 20% but less than 30%, mark "○" was given, and when it was less than 20%, mark "X" was given. The glare on the appearance was evaluated by visual observation. The weather resistance was evaluated in the following manner. Using a thermo-hygrostat, cycles of -5 to +30°C were repeated 100 times over 400 hours, and then the state of the metal oxide film was visually observed.

As described above, the solar reflective glass block of the present invention is formed with the metal oxide film on the inner side of at least one of the transparent walls. Therefore, even if it is used for the external wall of the building, it is possible to maintain the high solar reflection characteristic over a long term. Further, the film is not damaged during transportation or construction. It has the high solar reflection characteristic, the sufficient lighting and less glare on the appearance, thus excellent as a glass block.

Further, according to the method of the present invention, the foregoing glass blocks can be mass-produced with high yields.

### Industrial Applicability:

As described above, the solar reflective glass block according to the present invention is most suitable for the external wall of the building or the like.

Further, the producing method of the solar reflective glass block according to the present invention can mass-produce the foregoing glass blocks with high yields, and thus is most suitable for producing the solar reflective glass blocks.

## Claims

1. A solar reflective glass block comprising a glass press formed body of a hollow box shape having a pair of mutually confronting transparent walls, wherein at least one of said transparent walls has a metal oxide film formed on an inner side, said metal oxide film having a solar radiation reflectance of 15 to 60%, a solar radiation absorptance of 5 to 60% and a solar radiation transmittance of 20 to 70%, measured in accordance with J15 R3106.

2. A solar reflective glass block according to claim 1, wherein one of said transparent walls has a metal oxide film formed on an inner side, said metal oxide film having a solar radiation reflectance of 15 to 60%, a solar radiation absorptance of 5 to 60% and a solar radiation transmittance of 20 to 65%.

3. A solar reflective glass block according to claim 1, wherein both of said transparent walls have metal oxide films formed on inner sides, respectively, each of said metal oxide films having a solar radiation reflectance of 15 to 35%, a solar radiation absorptance of 5 to 40% and a solar radiation transmittance of 30 to 70%.

4. A solar reflective glass block according to any one of claims 1 to 3, wherein said metal oxide film is one selected from the group consisting of a cobalt-based film, an iron-based film and a titanium-based film.

5. A solar reflective glass block according to any one of claims 1 to 3, wherein said metal oxide film is a cobalt-based film in the range of CoO+Co₂O₃ being 70 to 100 weight%, NiO being 0 to 30 weight% and Fe₂O₃ being 0 to 30 weight%.

6. A method of producing a solar reflective glass block comprising steps of:
preparing a pair of glass press-formed bodies each having a box shape with a bottom and no top and each having a transparent wall;
spraying a solution containing metallic compound onto an inner side of the bottom of at least one of the glass press-formed bodies so as to form a metal oxide film having a solar radiation reflectance of 15 to 60%, a solar radiation absorptance of 5 to 60% and a solar radiation transmittance of 20 to 70%, measured in accordance with JIS R3106; and
softening open edges of said glass press-formed bodies by heating, and then sealing them together.

7. A method according to claim 6, wherein the solution containing metallic compound is sprayed onto an inner side of the bottom of one of the glass press-formed bodies so as to form a metal oxide film having a solar radiation reflectance of 15 to 60%, a solar radiation absorptance of 5 to 60% and a solar radiation transmittance of 20 to 65%.

8. A method according to claim 6, wherein the solution containing metallic compound is sprayed onto inner sides of the bottoms of both of the glass press-formed bodies so as to form metal oxide films each having a solar radiation reflectance of 15 to 35%, a solar radiation absorptance of 5 to 40% and a solar radiation transmittance of 30 to 70%.

9. A method according to any one of claims 6 to 8, wherein said solution containing metallic compound is a solution obtained by dissolving a metallic compound into an organic solvent.

10. A method according to claim 9, wherein said metallic compound is a metallic soap or an organic metallic salt.

11. A method according to claim 10, wherein said metallic soap is naphthenate or octylate.

12. A method according to claim 10, wherein said organic metallic salt is acetylacetone metallic salt.

13. A method according to any one of claims 6 to 12, wherein the metallic compound contained in said solution is a compound of one metal selected from the group consisting of Co, Ni, Fe and Ti.

## Patentansprüche

1. Sonnenstrahlung reflektierender Glasblock, enthaltend einen Preßform-Glasköper, der eine hohle Kastenform mit einem Paar von einander gegenüberliegenden lichtdurchlässigen Wänden aufweist, wobei an der Innenseite wenigstens einer dieser lichtdurchlässigen Wände ein Metalloxidfilm ausgebildet ist, der bei Messung gemäß der JIS R3106 einen Sonnenstrahlungs-Reflexionsgrad von 15 bis 60 %, ein Sonnenstrahlungs-Absorptionsvermögen von 5 bis 60 % und eine Sonnenstrahlungs-Durchlässigkeit von 20 bis 70 % aufweist.

2. Sonnenstrahlung reflektierender Glasblock gemäß Anspruch 1, wobei auf der Innenseite einer der lichtdurchlässigen Wände ein Metalloxidfilm ausgebildet ist, der einen Sonnenstrahlungs-Reflexionsgrad von 15 bis 60 %, ein Sonnenstrahlungs-Absorptionsvermögen von 5 bis 60 % und eine Sonnenstrahlungs-Durchlässigkeit von 20 bis 65 % aufweist.

3. Sonnenstrahlung reflektierender Glasblock gemäß Anspruch 1, wobei auf den Innenseiten von beiden lichtdurchlässigen Wänden jeweils Metalloxidfilme ausgebildet sind, die jeweils einen Sonnenstrahlungs-Reflexionsgrad von 15 bis 35 %, ein Sonnenstrahlungs-Absorptionsvermögen von 5 bis 40 % und eine Sonnenstrahlungs-Durchlässigkeit von 30 bis 70 % aufweisen.

4. Sonnenstrahlung reflektierender Glasblock gemäß einem der Ansprüche 1 bis 3, wobei der Metalloxidfilm aus einer einen auf Kobalt basierenden Film, einen auf Eisen basierenden Film und einen auf Titan basierenden Film umfassenden Gruppe ausgewählt wurde.

5. Sonnenstrahlung reflektierender Glasblock gemäß einem der Ansprüche 1 bis 3, wobei es sich bei dem Metalloxidfilm um einen auf Kobalt basierenden Film handelt, der CoO + Co₂O₃ im Bereich von 70 bis 100 Gew.-%, NiO im Bereich von 0 bis 30 Gew.-% und Fe₂O₃ im Bereich von 0 bis 30 Gew.-% enthält.

6. Verfahren zur Herstellung eines Sonnenstrahlung reflektierenden Glasblocks, enthaltend die folgenden Verfahrensschritte:
- Vorbereiten eines Paars von Preßform-Glaskörpern, die jeweils eine mit einem Boden versehene und nach oben offene Kastenform aufweisen und jeweils eine lichtdurchlässige Wand besitzen;
- Besprühen einer Innenseite des Bodens wenigstens eines der Preßform-Glaskörper mit einer Lösung in einer Weise, daß sich ein Metalloxidfilm bildet, der bei Messung gemäß JIS R3106 einen Sonnenstrahlungs-Reflexionsgrad von 15 bis 60 %, ein Sonnenstrahlungs-Absorptionsvermögen von 5 bis 60 % und eine Sonnenstrahlungs-Durchlässigkeit von 20 bis 70 % aufweist; und
- Erweichen der freiliegenden Kanten der Preßform-Glaskörper durch Erwärmen und darauffolgendes Verschmelzen der Kanten.

7. Verfahren nach Anspruch 6, wobei die eine metallische Verbindung enthaltende Lösung auf eine Innenseite des Bodens eines der Preßform-Glaskörper so aufgesprüht wird, daß sich ein Metalloxidfilm bildet, der einen Sonnenstrahlungs-Reflexionsgrad von 15 bis 60 %, ein Sonnenstrahlungs-Absorptionsvermögen von 5 bis 60 % und eine Sonnenstrahlungs-Durchlässigkeit von 20 bis 65 % aufweist.

8. Verfahren nach Anspruch 6, wobei die eine metallische Verbindung aufweisende Lösung derart auf die Innenseiten der Böden beider Preßform-Glaskörper so aufgesprüht wird, daß sich Metalloxidfilme bilden, die jeweils einen Sonnenstrahlungs-Reflexionsgrad von 15 bis 35 %, ein Sonnenstrahlungs-Absorptionsvermögen von 5 bis 40 % und eine Sonnenstrahlungs-Durchlässigkeit von 30 bis 70 % aufweisen.

9. Verfahren nach einem der Ansprüche 6 bis 8, wobei es sich bei der eine metallische Verbindung enthaltenden Lösung um eine Lösung handelt, die durch Auflösen einer metallischen Verbindung in einem organischen Lösungsmittel gewonnen wird.

10. Verfahren nach Anspruch 9, wobei die metallische Verbindung aus einem Schallplattenwachs oder einem organischen Metallsalz besteht.

11. Verfahren nach Anspruch 10, wobei das Schallplattenwachs aus Naphthenat oder Oktylat besteht.

12. Verfahren nach Anspruch 10, wobei das organische Metallsalz aus einem Acetylaceton-Metallsalz besteht.

13. Verfahren nach einem der Ansprüche 6 bis 12, wobei die in der Lösung enthaltene metallische Verbindung aus einer Verbindung eines Metalls besteht, das aus einer Co, Ni, Fe und Ti enthaltenden Gruppe ausgewählt wurde.

## Revendications

1. Bloc de verre réfléchissant au soleil comprenant un corps de verre formé à la presse en configuration de boîte creuse possédant une paire de parois transparentes en regard l'une de l'autre, dans lequel au moins l'une desdites parois transparentes comporte un film d'oxyde métallique formé sur un côté intérieur, ledit film d'oxyde métallique ayant un facteur de réflexion de radiation solaire de 15 à 60%, un facteur d'absorption de radiation solaire de 5 à 60% et un facteur de transmission de radiation solaire de 20 à 70% mesurées selon JIS R 3106.

2. Bloc de verre réfléchissant au soleil selon la revendication 1, dans lequel l'une desdites parois transparentes comporte un film d'oxyde métallique formé sur un côté intérieur, ledit film d'oxyde métallique ayant un facteur de réflexion solaire de 15 à 60%, un facteur d'absorption de radiation de 5 à 60% et un facteur de transmission de radiation solaire de 20 à 65%.

3. Bloc de verre réfléchissant au soleil selon la revendication 1, dans lequel lesdites deux parois transparentes comportent des films d'oxyde métallique formées respectivement sur les côtés intérieurs, chacun desdits films d'oxyde métallique ayant un facteur de réflexion de radiation solaire de 15 à 35%, un facteur d'absorption de radiation solaire de 5 à 40% et un facteur de transmission de radiation solaire de 30 à 70%.

4. Bloc de verre réfléchissant au soleil selon l'une quelconque des revendications 1 à 3, dans lequel ledit film d'oxyde métallique est un film choisi dans le groupe consistant en un film à base de cobalt, un film à base de fer et un film à base de titane.

5. Bloc de verre réfléchissant au soleil selon l'une quelconque des revendications 1 à 3, dans lequel ledit film d'oxyde métallique est un film à base de cobalt dans la plage de CoO+Co₂O₃ étant 70 à 100 % en poids, NiO étant 0 à 30 % en poids et Fe₂O₃ étant 0 à 30 % en poids.

6. Procédé pour produire un bloc de verre réfléchissant au soleil, comprenant les étapes consistant à :
préparer une paire de corps de verre formés à la presse, chacun ayant une configuration de boîte avec un fond et sans aucun dessus et chacun ayant une paroi transparente;
pulvériser une solution contenant un composé métallique sur un côté intérieur du fond d'au moins l'un des corps de verre formés à la presse de façon à créer un film d'oxyde métallique ayant un facteur de réflexion de radiation solaire de 15 à 60%, un facteur d'absorption de radiation solaire de 5 à 60% et un facteur de transmission de radiation solaire de 20 à 70% mesurés selon JIS R3106; et
adoucir les bords ouverts desdits corps de verre formés à la presse par chauffage, et ensuite les souder ensemble.

7. Procédé selon la revendication 6, dans lequel la solution contenant le composé métallique est pulvérisée sur un côté intérieur du fond de l'un des corps de verre formés à la presse de façon à créer un film d'oxyde métallique ayant un facteur de réflexion de radiation solaire de 15 à 60%, un facteur d'absorption de radiation solaire de 5 à 60% et un facteur de transmission de radiation solaire de 20 à 65%.

8. Procédé selon la revendication 6, dans lequel la solution contenant le composé métallique est pulvérisée sur les côtés intérieurs des fonds des deux corps de verre formés à la presse de façon à créer des films d'oxyde métallique, chacun ayant un facteur de réflexion de radiation solaire de 15 à 35%, un facteur d'absorption de radiation solaire de 5 à 40% et un facteur de transmission de radiation solaire de 30 à 70%.

9. Procédé selon l'une quelconque des revendications 6 à 8, dans lequel ladite solution contenant le composé métallique est une solution obtenue en dissolvant un composé métallique dans un solvant organique.

10. Procédé selon la revendication 9, dans lequel ledit composé métallique est un savon métallique ou un sel métallique organique.

11. Procédé selon la revendication 10, dans lequel ledit savon métallique est un naphténate ou un octylate.

12. Procédé selon la revendication 10, dans lequel ledit sel métallique organique est le sel métallique d'acétylacétone.

13. Procédé selon l'une quelconque des revendications 6 à 12, dans lequel le composé métallique contenu dans ladite solution est un composé d'un métal choisi dans le groupe consistant en Co, Ni, Fe et Ti.
